# EUROPÄISCHE PATENTANMELDUNG

(11) **EP 2 233 770 A2**
(43) Veröffentlichungstag der Anmeldung: **29.09.2010**
(21) Anmeldenummer: 10151780.3
(22) Anmeldetag: 27.01.2010
(51) Int. Cl.: F16F 9/32, F16F 9/34

(54) **Dämpfer**

(30) Priorität: 24.03.2009 DE 102009001772
(71) Anmelder: Robert Bosch GmbH, 70442 Stuttgart (DE)
(72) Erfinder: Kurz, Edgar, 74081 Heilbronn-Horkheim (DE); Kratzer, Dietmar, 71732 Tamm (DE)

(57) **Zusammenfassung**

Die Erfindung betrifft einen Dämpfer (10) mit einem Dämpferzylinder (12), einer Kolbeneinheit (14), die einen in dem Dämpferzylinder (12) über eine Kolbenstange (16) geführten Kolbenstempel (18) umfasst, und einer innerhalb des Dämpferzylinders (12) angeordneten Durchflusseinrichtung (20) zum Durchfluss eines Dämpferfluidstroms. Erfindungsgemäß weist der Dämpfer (10) mindestens eine in der Durchflusseinrichtung (20) angeordnete Separatoreinheit (22) auf, die zum Trennen von Dämpferfluidstrom und in dem Dämpferfluidstrom enthaltenen Partikeln vorgesehen ist

## Beschreibung

### Stand der Technik

Die Erfindung geht aus von einem Dämpfer nach der Gattung des unabhängigen Patentanspruchs 1.

In der Offenlegungsschrift DE 10 2007 025 966 A1 wird ein Dämpfer für ein Fahrzeug beschrieben. Der beschriebene Dämpfer umfasst einen mit Dämpferfluid befüllten Dämpferzylinder, in welchem ein Kolbenstempel über eine Kolbenstange geführt ist. Bei einer axialen Bewegung der Kolbenstange und damit des Kolbenstempels gegenüber dem Dämpferzylinder muss das Dämpferfluid durch eine innerhalb des Dämpferzylinders angeordnete Durchflusseinrichtung fließen. Durch den Widerstand, welcher dem Dämpferfluid hierbei entgegengebracht wird, werden Druckdifferenzen erzeugt, die über Wirkflächen Dämpfungskräfte erzeugen. Damit der Dämpfer in zwei Richtungen Dämpfungsarbeit ausüben kann und somit sowohl beim so genannten Ausfedern als auch beim so genannten Einfedern dämpft, weist die Durchflusseinrichtung eine in eine erste Durchflussrichtung wirkende Druckstufe und eine in eine zweite Durchflussrichtung wirkende Zugstufe auf. Üblicherweise wird der Dämpfer bei seiner Herstellung einmalig mit Dämpferfluid befüllt, welches über die gesamte Lebensdauer des Dämpfers in der einen geschlossenen Kreislauf bildenden Durchflusseinrichtung umläuft.

### Offenbarung der Erfindung

Der erfindungsgemäße Dämpfer mit den Merkmalen des unabhängigen Patentanspruchs 1 hat demgegenüber den Vorteil, dass der Dämpfer mindestens eine in der Durchflusseinrichtung angeordnete Separatoreinheit aufweist, die zum Trennen von Dämpferfluidstrom und in dem Dämpferfluidstrom enthaltenen Partikeln vorgesehen ist. Im Betrieb des Dämpfers fließt das Dämpferfluid innerhalb des Dämpferzylinders mindestens teilweise durch die erfindungsgemäße Separatoreinheit, wodurch sich das Dämpferfluid innerhalb des Dämpfers in einem ständigen Reinigungsprozess befindet. In vorteilhafter Weise werden hierdurch die gegenüber Schmutz und Spänen sensiblen beweglichen Komponenten des Dämpfers vor Bearbeitungsrückständen aus der Einzelteilefertigung und vor Spänen geschützt. Dies ist besonders bei einem Stoßdämpfer wichtig, da dieser üblicherweise bei seiner Herstellung einmalig mit Dämpferfluid befüllt wird, welches über die gesamte Lebensdauer des Dämpfers in der einen geschlossenen Kreislauf bildenden Durchflusseinrichtung umläuft. Das bedeutet, dass die Verunreinigungen nicht durch stetigen oder zyklischen Fluidwechsel entfernt werden, wie das beispielsweise bei Kraftstoffförderanlagen oder Bremsanlagen der Fall ist. Im Vergleich zum aktuellen Stand der Technik können aufgrund der erfindungsgemäßen Separatoreinheit die Anforderungen an Sauberkeit und Spänefreiheit der Dämpferkomponenten stark reduziert werden und die Robustheit gegenüber Störungen im Betrieb kann generell deutlich gesteigert werden. In vorteilhafter Weise sind hierdurch eine störungsfreie Funktion und eine wesentlich längere Lebensdauer des Dämpfers gewährleistet.

Durch die in den abhängigen Ansprüchen aufgeführten Maßnahmen und Weiterbildungen sind vorteilhafte Verbesserungen des im unabhängigen Patentanspruch 1 angegebenen Dämpfers möglich.

Besonders vorteilhaft ist, dass die Separatoreinheit in einer in eine erste Durchflussrichtung wirkenden Zugstufe der Durchflusseinrichtung und/oder in einer in eine zweite Durchflussrichtung wirkenden Druckstufe der Durchflusseinrichtung angeordnet ist. In vorteilhafter Weise strömt hierbei durch die in Richtung einer Hochachse des Dämpferzylinders gerichtete Bewegung der Kolbeneinheit der Dämpferfluidstrom mindestens teilweise durch die Separatoreinheit des Dämpfers. Durch das kontinuierliche Umpumpen desselben Dämpferfluids ist in vorteilhafter Weise nach einer Anzahl von Umpumpvorgängen das komplette Dämpferfluid gefiltert beziehungsweise die Trennung zwischen Dämpferfluid und Partikeln erfolgt. Die Durchflussrichtungen der Durchflusseinrichtung sind zwar entgegengesetzt gerichtet, sie ändern sich jedoch nicht innerhalb eines Durchflusskanals. Durch die immer gleich bleibende Durchflussrichtung innerhalb eines Durchflusskanals werden die Partikel in der Separatoreinheit zurückgehalten und dem Dämpferfluid auf diese Weise entzogen.

In einer Ausgestaltung des erfindungsgemäßen Dämpfers deckt die Separatoreinheit mindestens einen Durchflussquerschnitt der Durchflusseinrichtung mindestens teilweise ab. In vorteilhafter Weise ist hierdurch sowohl eine Vollfilterung über den gesamten Durchflussquerschnitt als auch eine Teilfilterung über einen Teil des Durchflussquerschnitts möglich, wobei der Grad der Abdeckung des Durchflussquerschnitts unter Berücksichtigung der Durchflussmenge des Dämpferfluids und des durch die mindestens teilweise Abdeckung erfolgenden Druckabfalls im Durchflusskanal frei wählbar ist.

In einer weiteren Ausgestaltung des erfindungsgemäßen Dämpfers umfasst die Separatoreinheit mindestens eine Filtereinheit und mindestens eine Abscheideinheit. Diese Ausgestaltung ermöglicht in vorteilhafter Weise eine besonders gute Trennung von Dämpferfluidstrom und den im Dämpferfluidstrom enthaltenen Partikeln.

In vorteilhafter Weise ist die Filtereinheit der Abscheideinheit in Durchflussrichtung vorgeschaltet. Bevorzugt ist die Filtereinheit zur Trennung von Partikeln vorgesehen, die eine vorbestimmte Größe überschreiten. Dies geschieht mittels der vorzugsweise ein Siebelement aufweisenden Filtereinheit, wobei das Siebelement eine vorbestimmte Maschenweite aufweist. Größere Partikel werden hierdurch in der Filtereinheit zurückgehalten, kleinere Partikel werden vom Dämpferfluidstrom weiter durch die Filtereinheit in Richtung der Abscheideinheit getragen. In vorteilhafter Weise wirkt die Filtereinheit auf diese Weise als Grobfilter beziehungsweise als Vorfilter.

In einer Ausgestaltung des erfindungsgemäßen Dämpfers weist die Abscheideinheit eine labyrinthartige Struktur auf, welche mindestens eine Ablagerungskammer ausbildet. In vorteilhafter Weise erfolgt die Abscheidung ohne zusätzlichen Aufwand mittels einer Strömungsumlenkung des Dämpferfluidstroms, der die Partikel nicht folgen können, so dass diese aufgrund ihrer Trägheit beziehungsweise auf Grund der Zentrifugalkraft auf ihrer Bewegungsbahn verbleiben, und dabei auf die Außenseite des Dämpferfluidstroms und anschließend in die nicht durchströmten Ablagerungskammern gelangen. Durch geeignete Gestaltung dieser Ablagerungskammern, wie beispielsweise Hinterschnitte, und durch die Tatsache, dass es keine Strömung in Gegenrichtung gibt, werden die Partikel dort zurückgehalten und dem Dämpferfluid beziehungsweise dem Dämpferfluidstrom so entzogen.

In einer weiteren Ausgestaltung des erfindungsgemäßen Dämpfers ist die Separatoreinheit einem Antriebsgehäuse der Kolbeneinheit in Durchflussrichtung vorgeschaltet. In vorteilhafter Weise ist hierdurch die Freigängigkeit der funktionswichtigen beweglichen Teile sichergestellt, indem vorhandene Fremdkörper beziehungsweise Partikel keine störende Wirkung haben. Die beweglichen Teile des Dämpfers, wie beispielsweise ein Schieber und/oder eine Schieberführung, eine Verzahnung zwischen einem Ritzel und einem Schieber, eine Antriebsachse und/oder das Antriebsgehäuse, laufen nur in einem im Wesentlichen partikelfreien Dämpferfluidstrom. In vorteilhafter Weise wird durch die erfindungsgemäße Ausgestaltung verhindert, dass Bearbeitungsrückstände aus der Stoßdämpfer-Komponentenfertigung oder im Betrieb des Dämpfers abgelöste Späne in die beweglichen Teile des Dämpfers geschwemmt werden und diese blockieren. Somit können die Anforderungen an die Sauberkeit und an das Handling in der Fertigung stark reduziert werden.

Im erfindungsgemäßen Dämpfer ist die Separatoreinheit als Einschubelement ausgebildet, das in eine Ausnehmung des Antriebsgehäuses einschiebbar ist. Ein wesentlicher Vorteil besteht im geringen Platzbedarf der Separatoreinheit und der dadurch erreichten Gewichtsersparnis.

Besonders vorteilhaft ist, dass die Durchflusseinrichtung einen geschlossenen Kreislauf bildet. Durch die Anordnung von mindestens einer erfindungsgemäßen Separatoreinheit in mindestens einem Durchflusskanal und durch das kontinuierliche Umpumpen desselben Dämpferfluids, ist in vorteilhafter Weise nach einer Anzahl von Umpumpvorgängen das komplette Dämpferfluid gefiltert beziehungsweise die Trennung zwischen Dämpferfluid und Partikeln erfolgt. Die kontinuierliche Filterung des Dämpferfluids beziehungsweise die kontinuierliche Trennung von Dämpferfluid und Partikeln im Betrieb des Dämpfers erlaubt es, kostentreibende Anforderungen an die Partikelfreiheit in der Dämpferfertigung zu reduzieren und stattdessen mit branchenüblichen Dämpferstandards zu arbeiten.

Ein Ausführungsbeispiel der Erfindung ist in den Zeichnungen dargestellt und wird in der nachfolgenden Beschreibung näher erläutert.

### Kurze Beschreibung der Zeichnungen

Figur 1 zeigt eine schematische perspektivische Darstellung eines Ausführungsbeispiels eines erfindungsgemäßen Dämpfers mit einem Dämpferzylinder und einer eine Kolbenstange und einen Kolbenstempel umfassenden Kolbeneinheit.
Figur 2 zeigt eine perspektivische Darstellung eines Ausführungsbeispiels des Kolbenstempels mit einem Stempelrohr und einem in dem Stempelrohr angeordneten Antriebsgehäuse.
Figur 3 zeigt das Antriebsgehäuse gemäß Fig. 2 mit einer zumindest teilweise innerhalb des Antriebsgehäuses angeordneten Separatoreinheit.
Figur 4 zeigt eine Draufsicht auf das Ausführungsbeispiel des Kolbenstempels ohne die Separatoreinheit.
Figur 5 zeigt den Kolbenstempel gemäß Fig. 4 mit der Separatoreinheit.
Figur 6 zeigt eine perspektivische Darstellung eines Ausführungsbeispiels der erfindungsgemäßen Separatoreinheit, die eine Filtereinheit und eine Abscheideinheit umfasst.
Figur 7 zeigt eine Draufsicht auf das Ausführungsbeispiel der erfindungsgemäßen Separatoreinheit, wobei eine Austrittsöffnung erkennbar ist.
Figur 8 zeigt einen Ausschnitt einer Draufsicht auf die erfindungsgemäße Separatoreinheit mit Strömungspfeilen des durchströmenden Dämpferfluids.
Figur 9 zeigt eine perspektivische Darstellung eines Teils einer erfindungsgemäßen Separatoreinheit, wobei in der Filtereinheit ein Siebelement und in der Abscheideinheit eine labyrinthartige Struktur mit der Austrittsöffnung erkennbar ist.

### Ausführungsformen der Erfindung

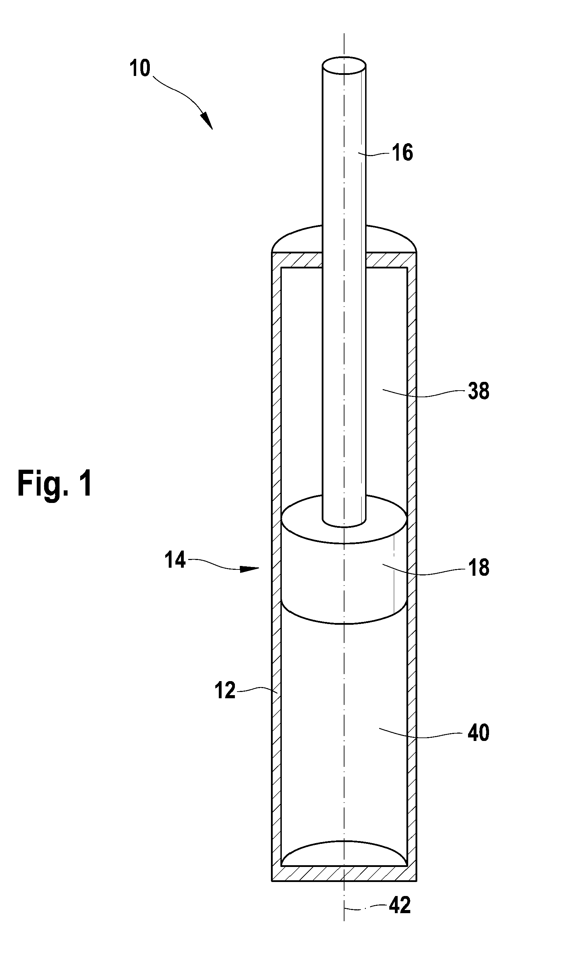

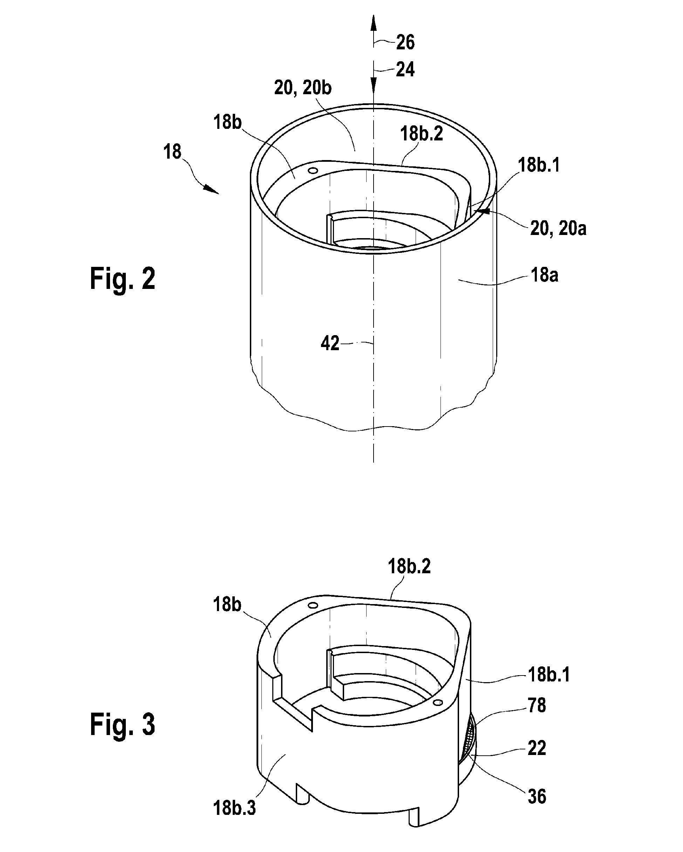

Wie aus Fig. 1 ersichtlich ist, umfasst ein erfindungsgemäßer Dämpfer 10, der vorzugsweise als Stoßdämpfer eines Fahrzeugs ausgeführt ist, einen mit einem Dämpferfluid befüllten Dämpferzylinder 12, in dem eine Kolbeneinheit 14 beweglich angeordnet ist, die eine Kolbenstange 16 und einen Kolbenstempel 18 umfasst, wobei der Kolbenstempel 18 über die Kolbenstange 16 in dem Dämpferzylinder 12 geführt wird. Der Kolbenstempel 18 teilt den Dämpferzylinder 12 in eine obere Dämpferkammer 38 und in eine untere Dämpferkammer 40. Bei einer axialen, vorzugsweise in Richtung einer Hochachse 42 des Dämpfers 10 verlaufenden Bewegung der Kolbenstange 16 und damit des Kolbenstempels 18 gegenüber dem Dämpferzylinder 12 muss das Dämpferfluid durch eine innerhalb des Dämpferzylinders 12 angeordneten Durchflusseinrichtung 20 fließen, die unter Bezugnahme auf Fig. 2 bis 5 detailliert beschrieben wird, wobei die Durchflusseinrichtung 20 vorzugsweise zwei Durchflusskanäle 20a, 20b aufweist.

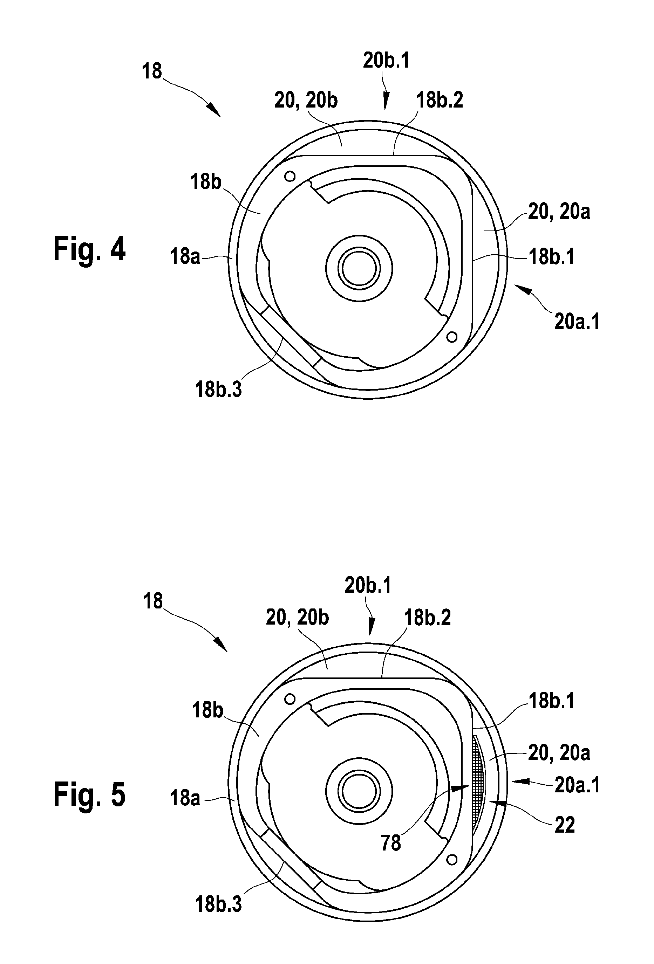

Wie aus Fig. 2 bis 5 ersichtlich ist, ist der Kolbenstempel 18 als kompakte Einheit ausgeführt. Der Kolbenstempel 18 umfasst ein Stempelrohr 18a, das beispielsweise als dünnwandiges Stahlrohr ausgeführt ist, und ein innerhalb des Stempelrohres 18a angeordnetes Antriebsgehäuse 18b. Die Geometrien des Stempelrohres 18a und des Antriebsgehäuses 18b bilden gemeinsam die beiden Durchflusskanäle 20a und 20b. Hierzu ist das Antriebsgehäuse 18b im Wesentlichen zylinderförmig ausgebildet und weist an seinem Umfang bevorzugt drei Abplattungen 18b.1, 18b.2, 18b.3 auf, die drei ebene Flächen bilden. Wie insbesondere aus Fig. 4 und 5 ersichtlich ist, bilden zwei Abplattungen 18b.1 und 18b.2 des Antriebsgehäuses 18b im vorliegenden Ausführungsbeispiel zusammen mit dem Stempelrohr 18a die aus freien Querschnitten 20a.1, 20b.1 gebildeten Durchflusskanäle 20a, 20b der Durchflusseinrichtung 20 zum Durchfluss des Dämpferfluids, d.h. die Durchflusskanäle 20a, 20b sind zwischen den Abplattungen 18b.1, 18b.2 des Antriebsgehäuses 18b und der Innenwand des Stempelrohres 18a angeordnet. Die dritte Abplattung 18b.3 bildet mit der Innenwand des Stempelrohres 18a im dargestellten Ausführungsbeispiel einen Versorgungskanal, der beispielsweise zur elektrischen Kontaktierung eines nicht dargestellten Antriebs verwendet werden kann.

Die Durchflusseinrichtung 20 umfasst mindestens eine in eine erste Durchflussrichtung 24 wirkende Zugstufe und/oder mindestens eine in eine zweite Durchflussrichtung 26 wirkende Druckstufe. Im vorliegenden Ausführungsbeispiel wirkt die Zugstufe im Durchflusskanal 20a und die Druckstufe im Durchflusskanal 20b. Die Durchflussrichtung 24, 26 der beiden Durchflusskanäle 20a, 20b ist entgegengesetzt, wobei sich die jeweilige Richtung innerhalb eines Kanals 20a, 20b nicht ändert. Vorzugsweise bildet die Durchflusseinrichtung 20 einen geschlossenen Kreislauf.

Um ein Blockieren von beweglichen Teilen des Dämpfers 10 durch im Dämpferfluidstrom enthaltene Partikel zu verhindern, weist der Dämpfer 10 erfindungsgemäß mindestens eine in der Durchflusseinrichtung 20 angeordnete Separatoreinheit 22 auf, die zum Trennen von Dämpferfluidstrom und den im Dämpferfluidstrom enthaltenen Partikeln vorgesehen ist. Bevorzugt ist die Separatoreinheit 22 in der in eine erste Durchflussrichtung 24 wirkenden Zugstufe der Durchflusseinrichtung 20 und/oder in der in eine zweite Durchflussrichtung 26 wirkenden Druckstufe der Durchflusseinrichtung 20 angeordnet, wobei im vorliegenden Ausführungsbeispiel der Durchflusskanal 20a als Zugstufe und der Durchflusskanal 20b als Druckstufe wirkt. Im vorliegenden Ausführungsbeispiel ist die Separatoreinheit 22 bevorzugt in dem als Zugstufe wirkenden Durchflusskanal 20a angeordnet. Und hierbei bevorzugt in einem geodätisch untenliegenden Bereich des Antriebsgehäuses 18b. Alternativ hierzu sind jedoch auch andere Einbauorte für die Separatoreinheit 22 möglich. Die Separatoreinheit 22 deckt mindestens einen Durchflussquerschnitt 20a.1, 20b.1 der Durchflusseinrichtung 20 ab. Im vorliegenden Ausführungsbeispiel deckt die Separatoreinheit 22 den Durchflussquerschnitt 20a.1 des Durchflusskanals 20a teilweise ab, d.h. die Separatoreinheit 22 deckt den freien Querschnitt 20a.1 des Durchflusskanals 20a teilweise ab. Selbstverständlich kann die Separatoreinheit 22 auch derart ausgestaltet sein, dass sie den mindestens einen Durchflussquerschnitt 20a.1, 20b.1 bzw. den freien Querschnitt 20a.1, 20b.1 der Durchflusseinrichtung 20 vollständig abdeckt.

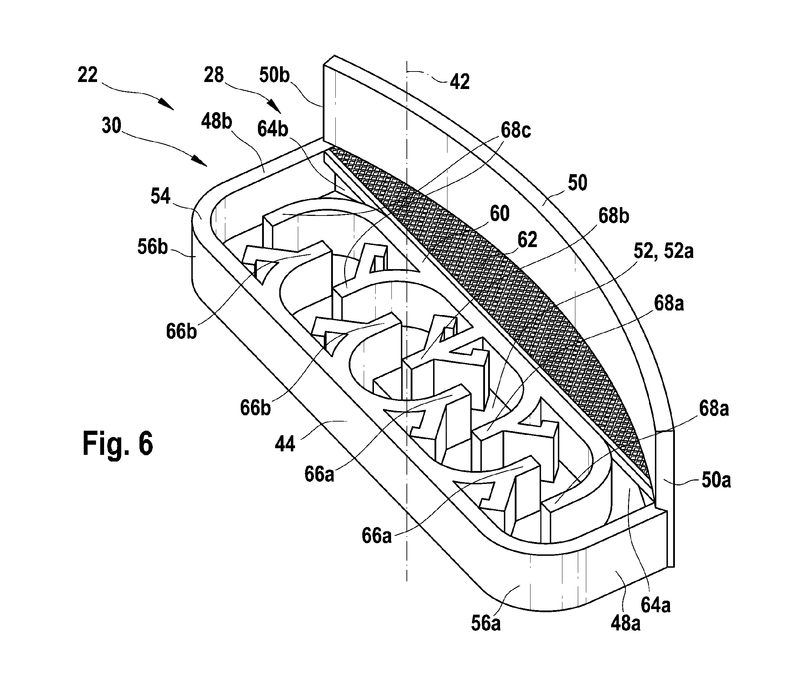

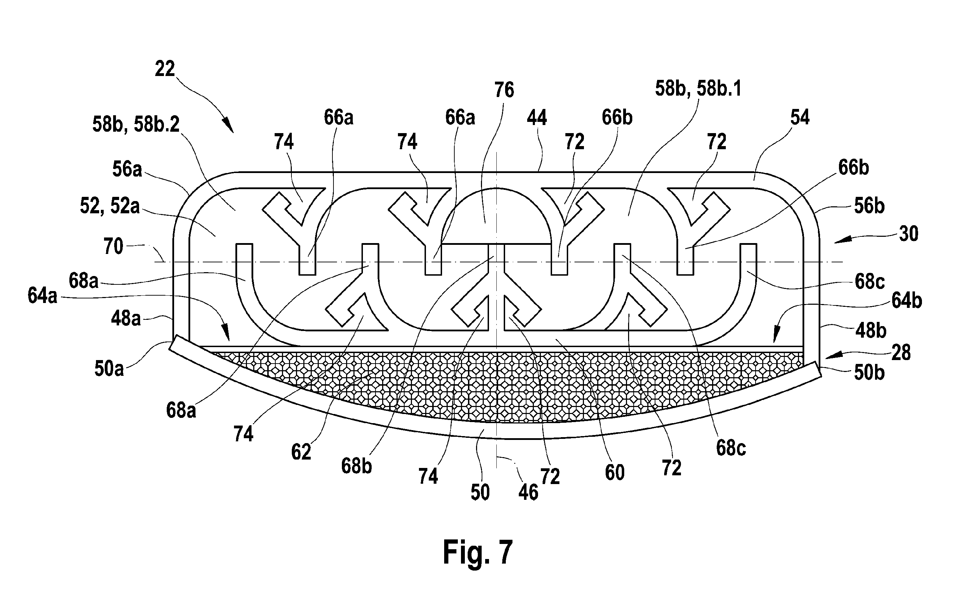

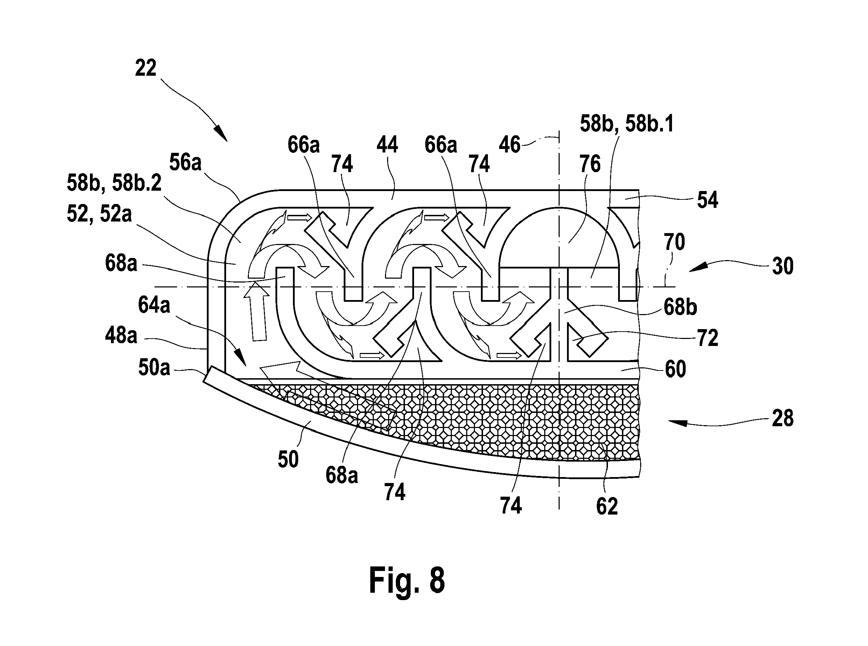

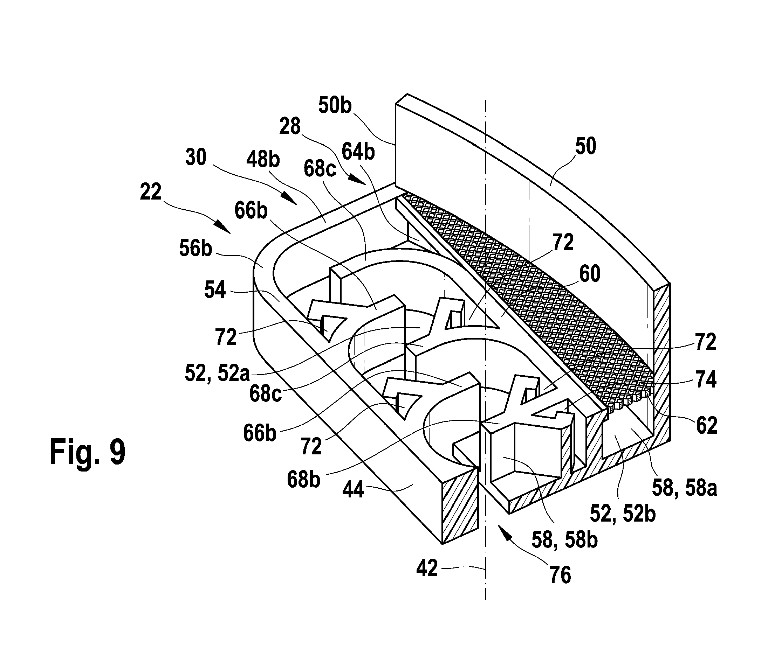

Wie aus Fig. 6 bis 9 ersichtlich, umfasst die Separatoreinheit 22 eine Filtereinheit 28 und eine Abscheideinheit 30. Die Filtereinheit 28 ist der Abscheideinheit 30 in Durchflussrichtung 24 vorgeschaltet, d.h. die Filtereinheit 28 ist stromauf der Abscheideinheit 30 angeordnet. Die Filtereinheit 28 ist dazu vorgesehen, Partikel, die eine vorbestimmte Größe überschreiten, aus dem Dämpferfluidstrom der Durchflusseinrichtung 20 herauszutrennen. Dies geschieht mittels der vorzugsweise ein Siebelement 62 aufweisenden Filtereinheit 28, wobei das Siebelement eine vorbestimmte Maschenweite aufweist. Die Filtereinheit 28 wirkt auf diese Weise als Grobfilter beziehungsweise als Vorfilter. Kleinere Partikel verbleiben im Dämpferfluidstrom und gelangen zusammen mit dem Dämpferfluidstrom in die Abscheideinheit 30. Die Abscheideinheit 30 weist eine labyrinthartige Struktur auf, welche mehrere Ablagerungskammern 72, 74 ausbildet. Die Abscheidung geschieht mittels einer Strömungsumlenkung des Dämpferfluidstroms, welcher die im Dämpferfluidstrom enthaltenen Partikel nicht folgen können, so dass diese aufgrund ihrer Trägheit auf ihrer Bewegungsbahn verbleiben und dabei in die nicht durchströmten Ablagerungskammern 72, 74 gelangen.

Die Separatoreinheit 22 ist dem Antriebsgehäuse 18b in Durchflussrichtung 24 vorgeschaltet, d.h. die Separatoreinheit 22 ist stromauf des Antriebsgehäuses 18b angeordnet. Im vorliegenden Ausführungsbeispiel ist die Separatoreinheit 22 als Einschubelement ausgebildet, das in eine Ausnehmung 36 des Antriebsgehäuses 18b einschiebbar ist. Die vorzugsweise als Schublade ausgebildete Separatoreinheit 22 weist eine Rückwand 44, zwei in Verschieberichtung 46 der Separatoreinheit 22 verlaufende Seitenwände 48a und 48b, eine der Rückwand 44 gegenüberliegende, vorzugsweise gebogene Frontblende 50 und einen entsprechenden Boden 52 auf, wobei die bogenförmige Frontblende 50 in Richtung der Hochachse 42 über eine Oberkante 54 der Rückwand 44 und der Seitenwände 48a, 48b hinausragt. Bevorzugt weist die Separatoreinheit 22 zwei der Frontblende 50 gegenüberliegende abgerundete Ecken 56a, 56b auf, d.h. die Seitenwände 48a, 48b gehen über einen Radius in die Rückwand 44 über.

Die als schubladenartiges Einschubelement ausgebildete Separatoreinheit 22 bildet einen Gesamtraum 58 aus, der in einen der Filtereinheit 28 zugehörigen Filterraum 58a und in einen an den Filterraum 58a anschließenden, der Abscheideinheit 30 zugehörigen Abscheidraum 58b unterteilt ist, wobei der Filterraum 58a mit dem Abscheidraum 58b in Strömungsverbindung steht. Der Gesamtraum 58 bzw. die beiden Räume 58a, 58b sind in nicht eingeschobenem Zustand der Separatoreinheit 22 nach oben hin offen ausgebildet.

Der vorzugsweise rechteckförmige Abscheidraum 58b wird durch einen ersten, im vorliegenden Ausführungsbeispiel rechteckigen Teil 52a des Bodens 52, die Rückwand 44, die beiden Seitenwände 48a, 48b der Schublade 22 und eine an die Seitenwände 48a, 48b anschließende und vorzugsweise parallel zur Rückwand 44 verlaufende Zwischenwand 60 begrenzt. An den Abscheidraum 58b schließt sich der Filterraum 58a an, welcher durch einen Teil 52b des Bodens 52, die Zwischenwand 60 und die bogenförmige Frontblende 50 der Schublade 22 begrenzt wird. Auf der Oberkante 54 der Zwischenwand 60 liegt ein vorzugsweise halblinsenförmiges Siebelement 62 der Filtereinheit 28 auf und liegt bündig an einer Innenseite der Frontblende 50 an. Hierdurch ist der Filterraum 58a durch das Siebelement 62 abgedeckt. Im vorliegenden Ausführungsbeispiel steht der Filterraum 58a vorzugsweise über zwei im Bereich der Zwischenwand 60 vorgesehene Eintrittsöffnungen 64a, 64b mit dem Abscheidraum 58b in Strömungsverbindung. Der Abscheidraum 58b weist eine labyrinthartige Struktur auf, die aus Stegen 66a, 66b, 68a, 68b, 68c gebildet wird, welche ausgehend von der Rückwand 44 beziehungsweise ausgehend von der Zwischenwand 60 im Wesentlichen in Richtung einer in Verschieberichtung verlaufenden Längsachse 46 in einen mittleren Bereich des Abscheidraumes 58b verlaufen. Vorzugsweise sind die Stege 66a, 66b, 68a, 68b, 68c an die Zwischenwand 60 beziehungsweise an die Rückenwand 44 angeformt. Die Stege 66a, 66b der Rückwand 44 und die Stege 68a, 68b, 68c der Zwischenwand 60 sind jeweils abwechselnd und in Richtung einer Querachse 70 versetzt zueinander angeordnet. Die Stege 66a, 66b, 68a, 68b, 68c der labyrinthartigen Struktur bilden mehrere Ablagerungskammern 72, 74 aus, welche derart ausgebildet sind, dass sich die eintretenden Partikel hier absetzen und nicht zurückgeschwemmt werden. Die Stege 66a, 66b, 68a, 68b, 68c der labyrinthartigen Struktur sind derart angeordnet beziehungsweise ausgebildet, dass zwei voneinander getrennte Abscheidebereiche 58b.1, 58b.2 gebildet sind. Die beiden getrennten Abscheidebereiche 58b.1, 58b.2 münden in eine gemeinsame vorzugsweise im Boden 52 beziehungsweise Bodenteil 52a angeordnete Austrittsöffnung 76. Die als Schikanen ausgebildeten Stege 66a, 66b, 68a, 68b, 68c sind so angeordnet, dass der in die Abscheideinheit 30 eintretende Dämpferfluidstrom mehrfach umgelenkt wird, wobei die Stege 66a, 66b, 68a, 68b, 68c in jedem Abscheidbereich 58b.1, 58b.2 einen im Wesentlichen wellenförmigen Strömungskanal ausbilden, der den jeweiligen Dämpferfluidteilstrom zu der gemeinsamen Austrittsöffnung 76 führt. Die in den Dämpferfluidteilströmen enthaltenen Partikel gelangen dabei in die Ablagerungskammern 72, 74 und schlagen sich dort nieder.

Die Separatoreinheit 22 ist bis zu zwei von der Frontblende 50 gebildeten Anschlägen 50a, 50b in die Ausnehmung 36 des Antriebsgehäuses 18b einschiebbar. Das Antriebsgehäuse 18b bildet im eingeschobenen Zustand der Separatoreinheit 22 einen Deckel zumindest für den Abscheidraum 58b, wobei der Filterraum 58a mit dem Siebelement 62 mindestens teilweise aus dem Antriebsgehäuse 18b vorsteht, wodurch ein halblinsenförmiger Querschnitt 78 zum Eintritt des Dämpferfluidstroms in die Separatoreinheit 22 vorhanden ist. D.h. der Eintritt der Separatoreinheit 22 ist so angeordnet, dass er in den freien Querschnitt bzw. in den Durchflusskanal 20a hineinragt, durch welchen der Dämpferfluidstrom innerhalb des Dämpfers 10 strömt.

Im Betrieb beziehungsweise während einer Beanspruchung des Dämpfers 10 strömt durch die in Richtung der Hochachse 42 des Dämpfers 10 bzw. des Dämpferzylinders 12 gerichtete Bewegung der Kolbeneinheit 14 ein Dämpferfluidstrom in der Durchflusseinrichtung 20, wobei mindestens ein Teil des Dämpferfluidstroms durch die Separatoreinheit 22 strömt. Aus dem Durchflusskanal 20a gelangt der Dämpferfluidstrom über den halblinsenförmigen Querschnitt 78 in die Filtereinheit 28. Zunächst strömt das Dämpferfluid durch das Siebelement 62 in den Filterraum 58a der Filtereinheit 28, wobei größere Partikel aus dem Dämpferfluidstrom in dem Siebelement 62 zurückgehalten werden und sich dort absetzen. Kleinere Partikel gelangen mit dem Dämpferfluidstrom in den Filterraum 58a. Im Filterraum 58a teilt sich der Dämpferfluidstrom in zwei Teilströme auf, welche jeweils über eine der im Bereich der Zwischenwand 60 vorgesehenen Eintrittsöffnungen 64a, 64b in den Abscheidraum 58b der Abscheideinheit 30 gelangen. Im Abscheidraum 58b strömen die Teilströme durch den jeweiligen Abscheidbereich 58b.1, 58b.2 d.h. durch den jeweiligen durch die Stege gebildeten Strömungskanal, wobei das Dämpferfluid mehrfach umgelenkt wird. Durch die Strömungsumlenkung erfolgt eine Abscheidung von Partikeln, da diese der Strömungsumlenkung auf Grund ihrer Trägheit beziehungsweise auf Grund der Zentrifugalkraft nicht folgen können. Die Partikel verbleiben auf ihrer Bewegungsbahn und gelangen dabei auf die Außenseite des Dämpferfluidstroms und anschließend in die nicht durchströmten Ablagerungskammern 72, 74, in welchen sie sich absetzen. Der im Wesentlichen gereinigte Dämpferfluidstrom beziehungsweise die im Wesentlichen gereinigten Teilströme treten über die Austrittsöffnung 76 aus der Separatoreinheit 22 aus, um den Reinigungsprozess beim nächsten Zyklus wieder zu durchlaufen.

## Patentansprüche

1. Dämpfer (10) mit einem Dämpferzylinder (12), einer Kolbeneinheit (14), die einen in dem Dämpferzylinder (12) über eine Kolbenstange (16) geführten Kolbenstempel (18) umfasst, und einer innerhalb des Dämpferzylinders (12) angeordneten Durchflusseinrichtung (20) zum Durchfluss eines Dämpferfluidstroms, **gekennzeichnet durch** mindestens eine in der Durchflusseinrichtung (20) angeordnete Separatoreinheit (22), die zum Trennen von Dämpferfluidstrom und in dem Dämpferfluidstrom enthaltenen Partikeln vorgesehen ist.

2. Dämpfer nach Anspruch 1, **dadurch gekennzeichnet, dass** die Separatoreinheit (22) in einer in eine erste Durchflussrichtung (24) wirkenden Zugstufe der Durchflusseinrichtung (20) und/oder in einer in eine zweite Durchflussrichtung (26) wirkenden Druckstufe der Durchflusseinrichtung (20) angeordnet ist.

3. Dämpfer nach Anspruch 1 oder 2, **dadurch gekennzeichnet, dass** die Separatoreinheit (22) mindestens einen Durchflussquerschnitt (20a.1, 20b.1) der Durchflusseinrichtung (20) mindestens teilweise abdeckt.

4. Dämpfer nach einem der Ansprüche 1 bis 3, **dadurch gekennzeichnet, dass** die Separatoreinheit (22) mindestens eine Filtereinheit (28) und mindestens eine Abscheideinheit (30) umfasst.

5. Dämpfer nach Anspruch 4, **dadurch gekennzeichnet, dass** die Filtereinheit (28) der Abscheideinheit (30) in Durchflussrichtung (24, 26) vorgeschaltet ist.

6. Dämpfer nach Anspruch 4 oder 5, **dadurch gekennzeichnet, dass** die Filtereinheit (28) zur Trennung von Partikeln vorgesehen ist, die eine vorbestimmte Größe überschreiten.

7. Dämpfer nach einem der Ansprüche 4 bis 6, **dadurch gekennzeichnet, dass** die Abscheideinheit (30) eine labyrinthartige Struktur aufweist, welche mindestens eine Ablagerungskammer (72, 74) ausbildet.

8. Dämpfer nach einem der Ansprüche 1 bis 7, **dadurch gekennzeichnet, dass** die Separatoreinheit (22) einem Antriebsgehäuse (18b) der Kolbeneinheit (14) in Durchflussrichtung (24, 26) vorgeschaltet ist.

9. Dämpfer nach einem der Ansprüche 1 bis 8, **dadurch gekennzeichnet, dass** die Separatoreinheit (22) als Einschubelement ausgebildet ist, das in eine Ausnehmung (36) des Antriebsgehäuses (18b) einschiebbar ist.

10. Dämpfer nach einem der Ansprüche 1 bis 9, **dadurch gekennzeichnet, dass** die Durchflusseinrichtung (20) einen geschlossenen Kreislauf bildet.
